# EUROPEAN PATENT APPLICATION

(11) **EP 4 060 604 A1**
(43) Date of publication of application: **21.09.2022**
(21) Application number: 21290017.9
(22) Date of filing: 16.03.2021
(51) Int. Cl.: G06T 5/50

(54) **METHOD AND SYSTEM TO GENERATE MODIFIED X-RAY IMAGES**

(71) Applicant: Koninklijke Philips N.V., 5656 AG Eindhoven (NL)
(72) Inventor: Schadewaldt, Nicole, 5656 AE Eindhoven (NL); Bystrov, Daniel, 5656 AE Eindhoven (NL); Franz, Astrid Ruth, 5656 AE Eindhoven (NL); Rouet, Jean-Michel, 5656 AE Eindhoven (NL)
(74) Representative: Philips Intellectual Property & Standards

(57) **Abstract**

A method of generating a modified X-ray image includes obtaining an X-ray image, obtaining a CT image corresponding to the X-ray image, determining a mapping between the X-ray image and the CT image, identifying a structure of interest in the CT image, generating an attenuation map from the CT image, the attenuation map indicative of attenuation due to the structure of interest or everything but the structure of interest on the X-ray image, and generating the modified X-ray image by subtracting the attenuation map from the X-ray image.

## Description

### FIELD OF THE INVENTION

The disclosed concept generally relates to X-ray images and, more particularly, to suppressing selected organs in X-ray images.

### BACKGROUND OF THE INVENTION

X-ray images are easy and quick to obtain and provide high resolution information on internal organs. X-ray images are frequently used for medical diagnosis. X-ray images are obtained by casting X-rays from a source, through a subject, and onto a detector. As the X-rays pass through the subject, the X-rays are attenuated by the various organs and bones that the X-rays pass through. The amount of attenuation between the source and various points on the detector is measured by the detector. The result is that denser structures, such as bones, appear lighter on the X-ray image. However, a given X-ray passing through a subject will likely pass through multiple organs and bones. In the resultant X-ray image, organs and bones that an X-ray passes through are essentially superimposed on each other. This can make it difficult to localize or identify abnormalities as they can be obscured by other tissue.

If an X-ray image is not sufficient for diagnosis, often a computed tomography (CT) image is ordered. In a CT scan, multiple two-dimensional radiographic images are taken around a single axis of rotation. These images provide three-dimensional information on the organs. However, a CT image suffers from lower resolution that an X-ray image, such that some conditions are blurred or lost due to partial-volume effect. In practice, the CT and X-ray images are reviewed in combination to provide the most accurate diagnosis.

There have been some algorithms developed to remove bones from chest X-ray images to allow a better view and thus evaluation of the lungs. However, these algorithms rely heavily on characteristics of the bones such as them being perpendicular to the X-ray direction, highly homogenous along the rib, and well-defined across the rib. These types of algorithms, because they rely on specific characteristics of bones, cannot be applied to the soft tissues found in organs.

There remains room for improvement in creating X-ray images more amendable to diagnostic review.

### SUMMARY OF THE INVENTION

Accordingly, it is an object of the disclosed concept to provide a system and method to modify X-ray images to remove structures of interest or everything but the structures of interest identified in a corresponding CT image.

As one aspect of the disclosed concept, a method of generating a modified X-ray image comprises: obtaining an X-ray image of a subject; obtaining a CT image of the subject corresponding to the X-ray image; determining a mapping between the X-ray image and the CT image; identifying a structure of interest in the CT image; generating an attenuation map from the CT image, the attenuation map indicative of attenuation due to the structure of interest or everything but the structure of interest on the X-ray image; and generating the modified X-ray image by subtracting the attenuation map from the X-ray image.

As one aspect of the disclosed concept, a system for generating a modified X-ray image comprises: a communication unit structured to receive an X-ray image of a subject and a CT image of the subject corresponding to the X-ray image; a memory structured to store a routine; and a processing unit structured to execute the routine stored in the memory, the execution of which causes processing unit: to determine a mapping between an X-ray image and a CT image; to identify a structure of interest in the CT image; to generate an attenuation map from the CT image, the attenuation map indicative of attenuation due to the structure of interest or everything but the structure of interest on the X-ray image; and to generate the modified X-ray image by subtracting the attenuation map from the X-ray image.

As one aspect of the disclosed concept, a non-transitory computer readable medium storing one or more programs, including instructions, which when executed by a computer, causes the computer to perform a method of generating a modified X-ray image, the method comprising: obtaining an X-ray image of a subject; obtaining a CT image of the subject corresponding to the X-ray image; determining a mapping between the X-ray image and the CT image; identifying a structure of interest in the CT image; generating an attenuation map from the CT image, the attenuation map indicative of attenuation due to the structure of interest or everything but the structure of interest on the X-ray image; and generating the modified X-ray image by subtracting the attenuation map from the X-ray image.

These and other objects, features, and characteristics of the disclosed concept, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the invention.

### BRIEF DESCRIPTION OF THE DRAWINGS

FIG. 1 is a flowchart of a method of modifying an X-ray image to suppress selected structures, such as organs, or to suppress everything but the selected structures, in accordance with an example embodiment of the disclosed concept;
FIG. 2 is schematic diagram of an alignment of a CT volume with an X-ray image in accordance with an example embodiment of the disclosed concept;
FIG. 3 is an image of segmented organs of interest in a CT image in accordance with an example embodiment of the disclosed concept;
FIG. 4 is a chest X-ray image in accordance with an example embodiment of the disclosed concept;
FIG. 5 is the chest X-ray image of FIG. 5 modified to remove the liver in accordance with an example embodiment of the disclosed concept;
FIG. 6 is the chest X-ray image of FIG. 5 modified to remove everything except the liver in accordance with an example embodiment of the disclosed concept;
FIG. 7 is a chest X-ray image in accordance with an example embodiment of the disclosed concept;
FIG. 8 is the chest X-ray image of FIG. 7 modified to remove the lungs in accordance with an example embodiment of the disclosed concept;
FIG. 9 is the chest X-ray image of FIG. 7 modified to remove everything but the lungs in accordance with an example embodiment of the disclosed concept; and
FIG. 10 is a schematic diagram of a system for modifying an X-ray image to suppress selected structures, such as organs in accordance with an example embodiment of the disclosed concept.

### DETAILED DESCRIPTION OF EXEMPLARY EMBODIMENTS

As required, detailed embodiments of the disclosed concept are disclosed herein; however, it is to be understood that the disclosed embodiments are merely exemplary of the invention, which may be embodied in various forms. Therefore, specific structural and functional details disclosed herein are not to be interpreted as limiting, but merely as a basis for the claims and as a representative basis for teaching one skilled in the art to variously employ the disclosed concept in virtually any appropriately detailed structure.

As used herein, the singular form of "a", "an", and "the" include plural references unless the context clearly dictates otherwise.

Directional phrases used herein, such as, for example and without limitation, top, bottom, left, right, upper, lower, front, back, and derivatives thereof, relate to the orientation of the elements shown in the drawings and are not limiting upon the claims unless expressly recited therein.

In accordance with an embodiment of the disclosed concept, X-ray images are able to be modified to remove one or more structures of interest, such as organs, identified in a corresponding CT image. In an embodiment of the disclosed concept, the converse may be performed. That is, the X-ray images are able to be modified to remove everything but the one or more structures of interest identified in a corresponding CT image. These and other embodiments will be described in more detail herein.

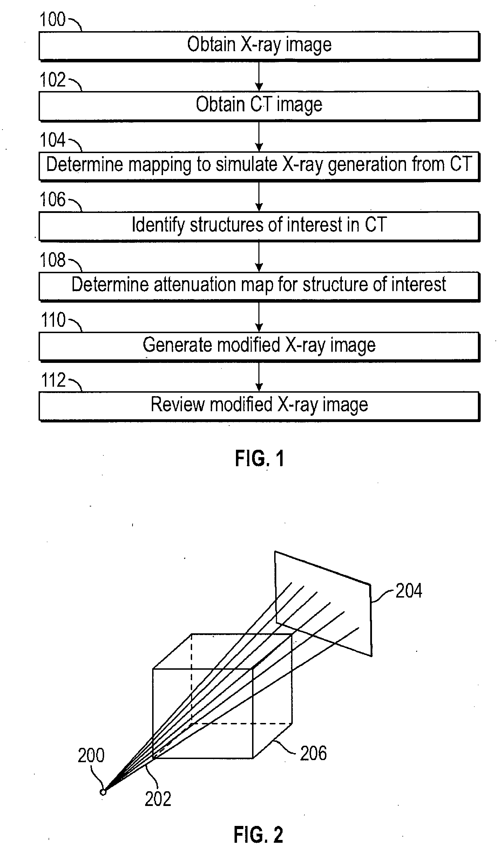

FIG. 1 is a flowchart of a method of modifying an X-ray image to suppress selected structures, such as organs, or to suppress everything but the selected structures, in accordance with an example embodiment of the disclosed concept.

The method of FIG. 1 begins at 100 by obtaining an X-ray image of a subject. Examples described herein will use a chest X-ray. However, it will be appreciated that the disclosed concept is applicable to other regions as well. The method continues at 102 where a CT image corresponding to the X-ray image is obtained. The CT image corresponds to the X-ray image in that the CT image is an image of a similar region to the X-ray image. For example, if a chest X-ray is taken, the CT image will also include the chest region of the subject. Additionally, it will be appreciated that in some embodiments, the X-ray image may be artificially generated by computing the attenuation through the CT volume.

The method continues at 104 where a mapping is determined to simulate X-ray generation from the CT image. In an example embodiment, the focal point, detector position, and X-ray direction are used to create a mapping such that an X-ray path through the CT image can be mapped to a corresponding point on the X-ray image. For example, FIG. 2 is schematic diagram of an alignment of a CT volume with an X-ray image in accordance with an example embodiment of the disclosed concept. As shown in FIG. 2, the focal point is an X-ray source 200. X-rays 202 emanate from the X-ray source 200, through the CT volume 206 (i.e., the 3D volume represented in the CT image), and onto a detector 204. When the position of the X-ray source 200 and the detector 204 are known with respect to the CT volume 206, it is a simple matter to map the path of X-rays 202 through the CT volume 206 to corresponding points on the detector 204 (i.e., the path of X-rays through the CT image to corresponding point on the X-ray image). In an example embodiment, these parameters are known or captured at the time the X-ray image is taken and the mapping can be determined based on these parameters. In some example embodiments, these parameters are not known or provided, but instead can be determined through simulation. For example, X-rays from different focal points and detector positions can be simulated through the CT image to generate artificial X-ray images. The focal points and detector positions can be simulated until the artificial X-ray image closely matches the previously obtained X-ray image. Once the focal points and detector positions have been determined through simulation in this embodiment, the mapping can be determined based on these parameters.

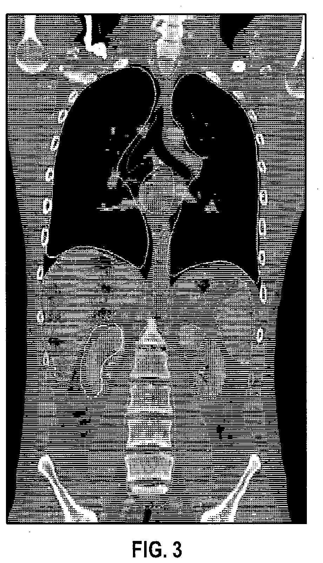

Referring back to FIG. 1, the method proceeds to 106, where structures of interest are identified in the CT image. The structures of interest may be organs, bones, or any other structures identifiable in a CT image. The identification includes identifying the volume encompassed by the structure of interest. In particular, the coordinates of the extents of the structure of interest are identified such that it is possible to calculate the distance a particular X-ray will travel through the structure of interest. Several algorithms exist for segmenting structures of interest in a CT image. One having ordinary skill in the art will appreciate that any such algorithm or variation thereof may be employed to identify and segment structures of interest in a CT image. For example, FIG. 3 is an image of segmented organs of interest in a CT image using a segmentation algorithm. As shown in FIG. 3, various organs, such as lungs, liver, and kidneys, and other structures are outlined as a result of the algorithm. While FIG. 3 shows one 2D slice of a CT image, it will be appreciated that the structures of interest are segmented by their entire 3D volume, such that the coordinates of the extents of the structures of interest are identified.

Referring back to FIG. 1 again, the method continues at 108 where an X-ray attenuation map for the structure of interest is determined. In an example embodiment, the X-ray attenuation map is a simulated X-ray image and is computed by modifying the CT image and integrating the attenuation of the X-rays through the modified CT image. The mapping of an X-ray path through the CT image to its corresponding point has been determined as well as the extents of the volume of the structure of interest. The Hounsfield units (HU) of the structure of interest are also known from the CT image. Using these parameters, it is possible to map the attenuation caused by just the structure of interest or everything but the structure of interest. For example, to create an attenuation map of just the structure of interest, everything but the structure of interest is set to have an HU equal to air. Then the attenuation map is created by simulating an X-ray image using the modified CT image. That is, the attenuation of the X-rays through the modified CT image is integrated through the CT image volume. As everything in the modified CT image but the structure of interest has been set equal to air, the simulated X-ray image (i.e., the attenuation map) will include only the structure of interest. In an example embodiment, the converse may be employed. That is, in the modified CT image, the HU of the structure of interest may be set as equal to air. The resultant attenuation map will include everything but the structure of interest.

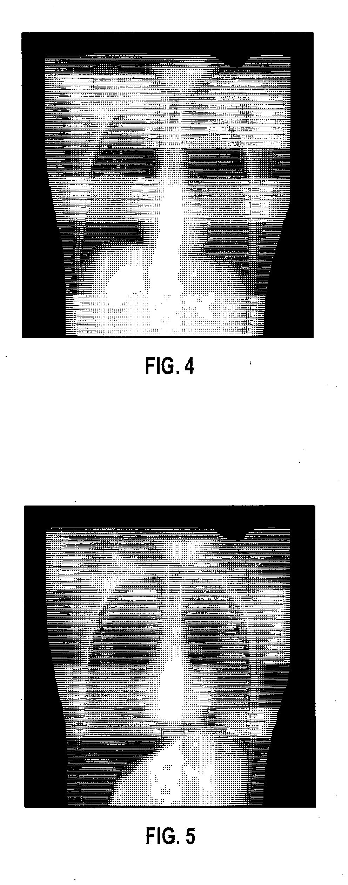

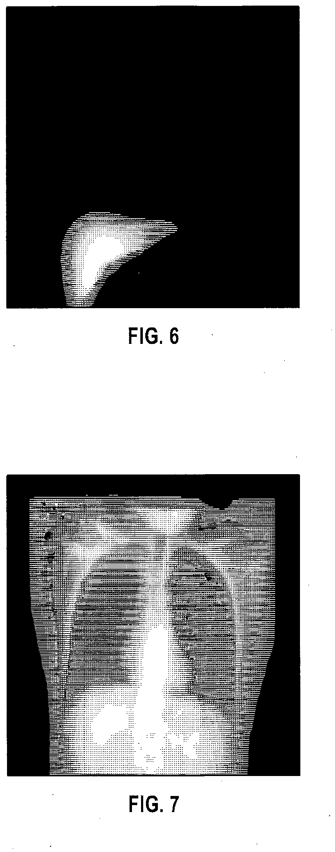

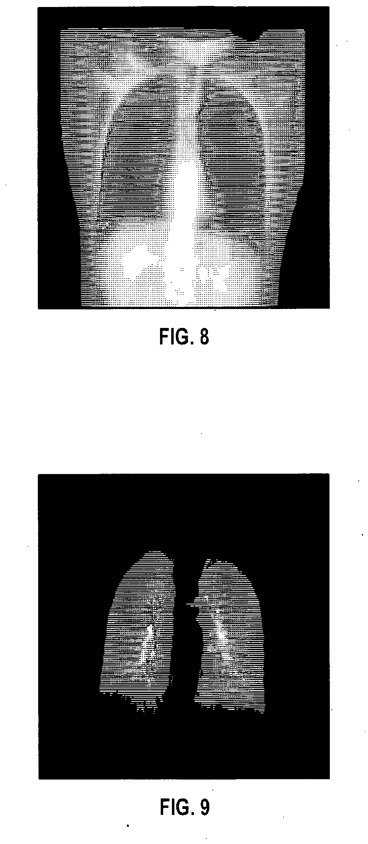

Once the attenuation map has been determined, a modified X-ray image is generated at 110. The modified X-ray image may be generated by subtracting the attenuation map from the previously obtained X-ray image. In the case where the attenuation map includes the structure of interest, subtracting the structure of interest from the previously obtained X-ray image will result in the structure of interest being removed from the X-ray image. For example, FIG. 4 is a chest X-ray image. Using the method of FIG. 1, an attenuation map including the liver is generated. As a result of subtracting the attenuation map from the X-ray image, a modified X-ray image, shown in FIG. 5, in which the liver is removed it obtained. Similarly, FIG. 6 is another chest X-ray image. Using the method of FIG. 1, an attenuation map including the lungs is generated. As a result of subtracting the attenuation map from the X-ray image, a modified X-ray image, shown in FIG. 8, in which the lungs are removed it obtained. The converse may also be employed. For example, if an attenuation map including everything but the liver is subtracted from the X-ray image of FIG. 4, the resultant modified X-ray image, shown in FIG. 6, includes only the liver. Similarly, if an attenuation map including everything but the lungs is subtracted from the X-ray image of FIG. 7, the resultant modified X-ray image, shown in FIG. 9, includes only the lungs. In this manner, it is possible to generate modified X-ray images in which structures of interest are removed or everything but the structures of interest are removed.

Finally, at 112 a user may review the modified X-ray image. However, this step may be omitted without departing from the scope of the disclosed concept.

In some example embodiments, the attenuation map is coarser than the X-ray image. This is in part due to an inexact mapping of the X-ray image and the CT image. For example, the focal point of the X-ray image may be estimated. However, this coarseness is irrelevant in the direction of the X-rays, since the attenuation is computed as an integral. In the direction perpendicular to the X-rays, the coarseness is irrelevant in homogenous regions (e.g., within the liver). Partial volume effects only diffuse the attenuation map in boundary regions of organs where densities change. For example, as shown in FIG. 5, the outline of the liver, due to the coarseness, is visible. However, this is beneficial, as the position of the organ is indicated for orientation, and the location of the modification is indicated and draws attention to the boundary line of the organ. Everywhere else, the modified X-ray image is accurate and has the high resolution of the original X-ray image.

In some example embodiments, the method may be performed interactively. For example, a user may select organs to activate or deactivate. Based on the user selection, the structures of interest can be changed and new modified X-ray images may be generated based on the user's selections. In some embodiments, previously generated modified X-ray images that correspond to the user's selections may be shown. In some example embodiments, the modified X-ray image may be shown side-by-side with the original X-ray image so that the difference in resolution caused by the activated or deactivated organ can be easily seen.

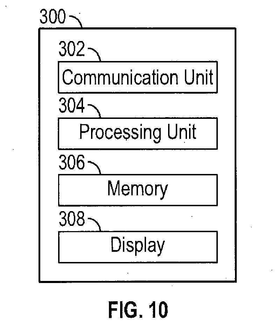

In an example embodiment, the disclosed concept may also be implemented on a system such as system 300 shown in FIG. 10. System 300 may be an electronic device such as, without limitation, a computer, a laptop, a mobile device, a server, etc. System 300 includes a communication unit 302, a processing unit 304, a memory 306, and a display 308.

Communication unit 302, in some embodiments, is structured to receive communication from outside components or components within system 300. For example, communication unit 302 may be structured to receive X-ray images and CT images such as those described above with respect to FIG. 1. Communication unit 302 may also receive other information such as parameters corresponding to an X-ray image, such as the relative positions of an X-ray source and detector. Communication unit 302 may also store any received information in memory 306.

Processing unit 304 may include a processor. The processor may be, for example and without limitation, a microprocessor, a microcontroller, or some other suitable processing device or circuitry, that interfaces with the memory. The memory 306 can be any of one or more of a variety of types of internal and/or external storage media such as, without limitation, RAM, ROM, EPROM(s), EEPROM(s), FLASH, and the like that provide a storage register, i.e., a machine readable medium, for data storage such as in the fashion of an internal storage area of a computer, and can be volatile memory or nonvolatile memory. Processing unit 304 is structured to control various functionality of system 300 and may implement one or more routines stored in the memory 306.

In an example embodiment, memory 306 may store a routine, which when executed by processing unit 304, causes processing unit 304 to determine a mapping between an X-ray image and a CT image, identify a structure of interest in the CT image, generate an attenuation map from the CT image, the attenuation map indicative of attenuation due to the structure of interest or everything but the structure of interest on the X-ray image, and generate the modified X-ray image by subtracting the attenuation map from the X-ray image. It will be appreciated that memory 306 may store one or more routines that, when executed by processing unit 304, cause processing unit 304 to describe any of the various functions described with respect to FIG. 1.

Display 308 may be any suitable type of display such as, without limitation, a liquid crystal display (LCD) or a light emitting diode (LED) display. Display 308 may be structured to display various text and graphics in one or multiple colors. In an example embodiment, display 308 may be structured to display the modified X-ray image.

It will also be appreciated that an embodiment of the disclosed concept may be embodied on a non-transitory computer readable medium storing one or more programs, including instructions, which when executed by a computer, causes the computer to perform the method described with respect to FIG. 1.

Although the invention has been described in detail for the purpose of illustration based on what is currently considered to be the most practical and preferred embodiments, it is to be understood that such detail is solely for that purpose and that the invention is not limited to the disclosed embodiments, but, on the contrary, is intended to cover modifications and equivalent arrangements that are within the spirit and scope of the appended claims. For example, it is to be understood that the present invention contemplates that, to the extent possible, one or more features of any embodiment can be combined with one or more features of any other embodiment.

In the claims, any reference signs placed between parentheses shall not be construed as limiting the claim. The word "comprising" or "including" does not exclude the presence of elements or steps other than those listed in a claim. In a device claim enumerating several means, several of these means may be embodied by one and the same item of hardware. The word "a" or "an" preceding an element does not exclude the presence of a plurality of such elements. In any device claim enumerating several means, several of these means may be embodied by one and the same item of hardware. The mere fact that certain elements are recited in mutually different dependent claims does not indicate that these elements cannot be used in combination.

## Claims

1. A method of generating a modified X-ray image, the method comprising:
obtaining (100) an X-ray image of a subject;
obtaining (102) a CT image of the subject corresponding to the X-ray image;
determining (104) a mapping between the X-ray image and the CT image;
identifying (106) a structure of interest in the CT image;
generating (108) an attenuation map from the CT image, the attenuation map indicative of attenuation due to the structure of interest or everything but the structure of interest on the X-ray image; and
generating (110) the modified X-ray image by subtracting the attenuation map from the X-ray image.

2. The method of claim 1, wherein determining a mapping between the X-ray image and the CT image is based at least on a position of an X-ray source and a detector used to obtain the X-ray image.

3. The method of claim 1, wherein determining a mapping between the X-ray image and the CT image includes generating a plurality of simulated X-ray images from the CT image and using parameters corresponding to the simulated X-ray image among the plurality of X-ray images most closely matching the X-ray image.

4. The method of claim 1, wherein identifying the structure of interest in the CT image includes identifying extents of a volume encompassed by the structure of interest.

5. The method of claim 1, wherein the structure of interest is an organ.

6. The method of claim 1, wherein the attenuation map is indicative of attenuation due to the structure of interest, and wherein the structure of interest is removed from the modified X-ray image.

7. The method of claim 6, wherein the attenuation map is generated by creating a modified CT image in which HU values of everything but the structure of interest are set equal to an HU value of air and integrating attenuation of X-rays through the modified CT image.

8. The method of claim 6, wherein a boundary of the structure of interest in the modified X-ray image is coarser than a remainder of the X-ray image.

9. The method of claim 1, wherein the attenuation map is indicative of attenuation due to everything but the structure of interest, and wherein everything but the structure of interest is removed from the modified X-ray image.

10. The method of claim 9, wherein the attenuation map is generated by creating a modified CT image in which HU values of the structure of interest are set equal to an HU value of air and integrating attenuation of X-rays through the modified CT image.

11. The method of claim 1, wherein the X-ray image has a higher resolution than the CT image.

12. The method of claim 1, further comprising:
displaying the X-ray image and the modified X-ray image.

13. A system (300) for generating a modified X-ray image, the system comprising:
a communication unit (302) structured to receive an X-ray image of a subject and a CT image of the subject corresponding to the X-ray image;
a memory (306) structured to store a routine; and
a processing unit (304) structured to execute the routine stored in the memory, the execution of which causes processing unit:
to determine a mapping between an X-ray image and a CT image;
to identify a structure of interest in the CT image;
to generate an attenuation map from the CT image, the attenuation map indicative of attenuation due to the structure of interest or everything but the structure of interest on the X-ray image; and
to generate the modified X-ray image by subtracting the attenuation map from the X-ray image.

14. A non-transitory computer readable medium storing one or more programs, including instructions, which when executed by a computer, causes the computer to perform a method of generating a modified X-ray image, the method comprising:
obtaining (100) an X-ray image of a subject;
obtaining (102) a CT image of the subject corresponding to the X-ray image;
determining (104) a mapping between the X-ray image and the CT image;
identifying (106) a structure of interest in the CT image;
generating (108) an attenuation map from the CT image, the attenuation map indicative of attenuation due to the structure of interest or everything but the structure of interest on the X-ray image; and
generating (110) the modified X-ray image by subtracting the attenuation map from the X-ray image.
